# EUROPÄISCHE PATENTSCHRIFT

(11) **EP 3 752 809 B1**
(45) Veröffentlichungstag und Bekanntmachung des Hinweises auf die Patenterteilung: **28.09.2022**
(21) Anmeldenummer: 19706871.1
(22) Anmeldetag: 01.02.2019
(51) Int. Cl.: G01L 9/00, G01L 9/06

(54) **ANORDNUNG FÜR EINEN HALBLEITERBASIERTEN DRUCKSENSORCHIP UND DRUCKSENSORCHIP**
ARRANGEMENT FOR A SEMICONDUCTOR-BASED PRESSURE SENSOR CHIP, AND PRESSURE SENSOR CHIP
ASSEMBLAGE POUR UNE PUCE DE CAPTEUR DE PRESSION À SEMI-CONDUCTEUR ET PUCE DE CAPTEUR DE PRESSION

(30) Priorität: 13.02.2018 DE 102018103180
(43) Veröffentlichungstag der Anmeldung: 23.12.2020
(73) Patentinhaber: First Sensor AG, 12459 Berlin (DE)
(72) Erfinder: PIERSCHEL, Michael, 12621 Berlin (DE)
(74) Vertreter: Grünecker Patent- und Rechtsanwälte PartG mbB
(86) Internationale Anmeldenummer: PCT/DE2019/100110
(87) Internationale Veröffentlichungsnummer: WO 2019/158155

(56) Entgegenhaltungen:
- US-A- 5 780 727
- US-A1- 2009 036 754
- US-A1- 2012 198 946

## Beschreibung

Die Erfindung betrifft eine Anordnung für einen halbleiterbasierten Drucksensorchip und einen Drucksensorchip.

### Hintergrund

Halbleiterdrucksensoren mit piezoresistiven Elementen werden in vielen Applikationen der Technik, Medizin, Automobilen und im Maschinenbau eingesetzt. Hierbei werden in der Regel mittels Dotierung Halbleiterbereiche nahe einer Chipoberfläche genutzt, die über eine mechanische Verspannung des Chips Signale generieren. Diese Signale sind in der Regel nicht sehr groß. Deshalb werden Brückentechniken wie beispielsweise eine Wheatstonsche Messbrücke genutzt, um die auf einem Chip entstehenden Signaldifferenzen zu nutzen.

Um die Empfindlichkeit der Strukturen weiter zu erhöhen, wird in der Regel wenigstens der zentrale Bereich eines solchen Chips, in dem sich die piezoresistiven Strukturen befinden, von der Rückseite her selektiv abgedünnt. Die verbleibende Deckschichtdicke, die auch als Membrandicke bezeichnet wird, bestimmt oft die Gesamtempfindlichkeit eines solchen Chips.

Allerdings sind sehr kleine Membrandicken technisch nur schwer reproduzierbar zu fertigen. Für die Messung feinster Druckunterschiede reichen deshalb die vorhandenen Lösungen oft nicht aus.

Um die mechanischen Eigenschaften und die Hysterese der gewonnenen Signale zu verbessern besitzen solche Chips oft zusätzliche Deckschichten, auch über den piezoresistiven Strukturen, die sich meist im Halbleitersubstrat befinden. In der Regel existieren immer isolierende Deckschichten, um die Generationseigenschaften des Halbleitersubstrates technisch zu beherrschen. Darüber liegende Deckschichten können ebenfalls als Isolator über den Strukturen liegen oder auch als leitfähige Schicht, beispielsweise als Metallschicht oder als dotierte Polysiliziumschicht oder als leitfähige ITO-Schicht ("*Indium Tin Oxide*").

Dokument EP 0 783 670 B1 offenbart einen elektromechanischen Messumformer mit piezoresistiven Elementen, die mit einem elektrisch dotierten Kanal in einem Halbleiter-Substrat gebildet sind.

Dokument EP 2 485 028 A1 offenbart eine druckempfindliche Verstärkerstufe, die vier unipolare Drucksensor-Transistoren mit jeweils einem piezoresistiven Strompfad aufweist, die als Druckmessbrücke mit zwei Brückenzweigen verschaltet sind, welche jeweils einen ersten und einen zweiten, bezüglich ihrer Strompfade in Reihe geschalteten Drucksensor-Transistor aufweisen. Ferner sind zwei unipolare Steuer-Transistoren mit jeweils einem Steueranschluss und einem sich zwischen einem weiteren ersten und einem weiteren zweiten Anschluss erstreckenden Strompfad vorgesehen. Hierbei sind die ersten und die zweiten Anschlüsse der Steuer-Transistoren jeweils paarweise verbunden sowie die Steueranschlüsse der Steuer-Transistoren jeweils mit einem Knotenpunkt zwischen den Drucksensor-Transistoren der beiden Brückenzweige. Die untereinander verbundenen zweiten Anschlüsse der beiden parallel geschalteten Steuer-Transistoren sind mit den Steueranschlüssen der zweiten Drucksensor-Transistoren der beiden Brückenzweige verbunden. Die Verstärkerstufe weist ferner zwei Stromquellen auf. An die Steueranschlüsse der ersten Drucksensor-Transistoren der beiden Brückenzweige ist eine Betriebseingangsspannung anlegbar, und zwischen den jeweiligen Drucksensor-Transistoren der beiden Brückenzweige ist eine Messausgangsspannung abgreifbar, wobei die Messausgangsspannung der Druckmessbrücke mit den Steueranschlüssen der ersten Drucksensor-Transistoren der beiden Brückenzweige einer weiteren Druckmessbrücke zur Kaskadierung der Druckmessbrücken angelegt wird.

Das Dokument US 2009 / 0 036 754 A1 betrifft eine selbstkalibrierende Vorrichtung zur Druckmessung. Die Vorrichtung weist eine Membran und eine Schichtanordnung auf. Für die Messung des Drucks sind in der Membran piezoelektrische Wandler angeordnet, insbesondere Feldtranseffektransistoren. Es ist eine Brückenschaltung vorgesehen. Die Membran, insbesondere das jeweilige piezoresistive Element in der Membran, ist mittels einer Isolierschicht von einer leitenden Deckschicht der Vorrichtung isoliert.

### Zusammenfassung

Aufgabe der Erfindung ist es, eine verbesserte Anordnung für einen halbleiterbasierten Drucksensorchip und einen Drucksensorchip anzugeben, um die Messempfindlichkeit der Drucksensoren zu erhöhen.

Zur Lösung sind eine Anordnung für einen halbleiterbasierten Drucksensorchip nach dem unabhängigen Anspruch 1 geschaffen. Ausgestaltungen sind Gegenstand von abhängigen Unteransprüchen.

Mittels der vorgeschlagenen Signalrückkopplung auf die Brückenschaltung selbst wird die anfänglich durch eine mechanische Verspannung hervorgerufene Brückenverstimmung verstärkt. Es ist so eine erhöhte Messempfindlichkeit bereitgestellt.

Der elektrische Widerstand, also die elektrische Leitfähigkeit, des elektrisch dotierten Kanals der piezoresistiven Elemente ist aufgrund mechanischer Verspannung des zugeordneten Bereichs der Druckmembran veränderbar. Wird die Druckmembran mit Druck beaufschlagt, so verformt sie sich, wodurch die elektrische Leitfähigkeit des zugeordneten elektrisch dotierten Kanals verändert wird.

Der elektrische Widerstand des elektrisch dotierten Kanals ist weiterhin mittels Ansteuerung der Gate-Elektrode des dem piezoresistiven Element zugeordneten Transistors veränderbar.

Die Isolierschicht in der Schichtanordnung bildet eine Gate-Elektroden-Isolierung gegenüber den Strukturen im Halbleitersubstrat, insbesondere gegenüber dem elektrisch dotierten Kanal.

Mittels der vorgeschlagenen Ausgestaltung der Signalrückkopplung ist das an einem Ausgang der Brückenschaltung anliegende Ausgangssignal auf eine oder mehrere der Gate-Elektroden signalverstärkend auf der Anordnung der die Brückenschaltung bildenden Transistoren (also auf die Brückenschaltung selbst) rückgekoppelt.

Die Gate-Elektroden können zum Rückkoppeln einzeln an Ausgänge der Brückenschaltung angeschlossen sein. Alternativ können die Gate-Elektroden paarweise an den Ausgang der Brückenschaltung angeschlossen sein.

Die Transistoren können jeweils mit einer Metall-Oxid-Halbleiterstruktur gebildet sein, in welcher der elektrisch dotierte Kanal der piezoresistiven Elemente als Metall-Oxid-Halbleiterkanal ausgeführt ist.

Die Brückenschaltung des halbleiterbasierten Drucksensorchips ist aus den vier Transistoren bestehend gebildet. Dies bedeutet insbesondere, dass bei der Brückenschaltung die Signalrückkopplung frei von weiteren Transistoren ausgeführt ist. Hierdurch kann bei der Brückenschaltung die Signalrückkopplung frei von weiteren Transistoren auf dem Drucksensorchip ausgeführt sein.

Der Drucksensorchip kann mit nur einer einzigen Anordnung ausgeführt sein, bei der die Transistoranordnung der Brückenschaltung von den (nur) vier Transistoren gebildet ist.

Die Signalrückkopplung kann eine Signalvorverarbeitung aufweisen, die eingerichtet ist, das am Ausgang der Brückenschaltung anliegende Ausgangssignal vor dem Rückkoppeln aufzubereiten. Die Signalvorverarbeitung kann eine elektrische Filtereinrichtung umfassen, die eingerichtet ist, das rückzukoppelnde Ausgangssignal vor dem Rückkoppeln zu filtern. Die Signalvorverarbeitung kann eine Kompensationseinrichtung aufweisen, die eingerichtet ist, das rückzukoppelnde Ausgangssignal vor dem Rückkoppeln zu verarbeiten, derart, dass Nichtlinearitäten in dem Gang des Ausgangssignales über der Temperatur oder über dem zu erfassenden Druckbereich beseitigt werden, beispielsweise Nichtlinearitäten aufgrund von Temperatureinflüssen und / oder anderen Einflüssen.

Die Gate-Elektroden können paarweise an die Signalvorverarbeitung koppeln.

Die Gate-Elektroden können einzeln an die Signalvorverarbeitung koppeln. Auf diese Weise können für die Gate-Elektroden der verschiedenen Transistoren individuell angepasste Rückkopplungssignale bereitgestellt werden.

Die Signalvorverarbeitung kann Arbeitspunkt verschiebende oder einstellende Schaltungselemente aufweisen, die jeweils einem der Transistoren zugeordnet und eingerichtet sind, den jeweiligen Arbeitspunkt der Transistoren einzustellen. Auf diese Weise können Unterschiede betreffend den Arbeitspunkt der Transistoren kompensiert werden.

Die Gate-Eiektroden der Transistoren können in der elektrisch leitfähigen Halbleiterschicht aus dotiertem Polysilizium sein. Alternativ können die Halbleitermaterialien InP oder GaAsP zum Einsatz kommen.

Der Ausgang der Brückenschaltung kann mit einem positiven und einem negativen Ausgang gebildet sein, an welchen das Ausgangssignal symmetrisch als positives und negatives Ausgangssignal anliegt. Es kann vorgesehen sein, das positive Signal an die Gate-Elektroden von zwei der Transistoren und das negative Ausgangssignal an die anderen zwei der Transistoren rückzukoppeln.

Bei den piezoresistiven Elementen kann der dotierte Kanal zwischen elektrisch dotierten Gebieten angeordnet und mit diesen leitfähig verbunden sein, wobei der dotierte Kanal über die dotierten Gebiete nach außen kontaktierbar ist. Zur elektrischen Kontaktierung können die dotierten Gebiete mit Kontakt- oder Anschlussstellen elektrisch verbunden sein. Die dotierten Gebiete können eine höhere Dotierung als der dotierte Kanal aufweisen, also eine höhere Dotierstoffkonzentration. Der Schichtwiderstand der Piezodotierungen, hier dotierter Kanal genannt, kann zum Beispiel etwa 900 Ohm pro Quadrat betragen. Der elektrische Widerstand der dotierten Gebiete kann bei etwa 25 bis etwa 30 Ohm pro Quadrat liegen. Die entsprechenden Konzentrationen des Dotierungsstoffes können sich also wenigstens um den Faktor von etwa 30 unterscheiden.

Der (elektrisch) dotierte Kanal kann in Berührungskontakt mit den dotierten Gebieten gebildet sein.

Die elektrisch dotierten Schichtbereiche, in welchen die Gate-Eiektroden gebildet sind, können mit Blick auf eine Flachseite der Druckmembran mit den elektrisch dotierten Gebieten überlappen. Die elektrisch dotierten Schichtbereiche können flächenmäßig wenigstens zu 50 Prozent mit den elektrisch dotierten Gebieten überlappen.

In Verbindung mit dem Drucksensorchip können die im Zusammenhang mit der Anordnung vorangehend erläuterten Ausgestaltungen entsprechend vorgesehen sein. Hierbei kann die Signalvorverarbeitung in den Drucksensorchip integriert sein (chipintern) oder mit Schaltungselementen, insbesondere mit denen, die vorangehend beispielhaft beschrieben wurden, außerhalb des Drucksensorchips (chipextern) erfolgen.

Die Formulierung Dotierung bezieht sich in Verbindung mit der vorliegenden Offenbarung auf eine elektrische Dotierung, mit der die elektrische Leitfähigkeit des dotierten Materials verändert oder moduliert wird.

Für ein sogenanntes "level shifting" kann in einer Ausgestaltung für alle (vier) Transistoren der Brückenschaltung ein (Extra-) Anschluss der jeweiligen Gate-Elektrode vorgesehen sein. Eine externe Signalvorverarbeitung, also zum Beispiel eine Signalverarbeitung außerhalb des Drucksensorchips mit der Brückenschaltung, kann eingerichtet sein, entweder für alle Transistoren der Brückenschaltung gleich ein im DC-Arbeitspunkt passendes Ausgangssignal zu liefern, oder die zwei Ausgangssignale der Brückenschaltung werden jeweils noch über eine Schaltung zum Verschieben des Arbeitspunktpegels so verändert, dass vier gewünschte unterschiedliche Signale generiert werden.

### Beschreibung von Ausführungsbeispielen

im Folgenden werden weitere Ausführungsbeispiele unter Bezugnahme auf Figuren einer Zeichnung näher erläutert. Hierbei zeigen:
- Fig. 1: eine schematische Darstellung einer Anordnung für einen halbleiterbasierten Drucksensorchip im Schnitt;
- Fig. 2: eine schematische Darstellung einer Brückenschaltung mit Transistoren für einen Drucksensorchip;
- Fig. 3: eine schematische Darstellung einer weiteren Brückenschaltung mit Transistoren für einen Drucksensorchip, wobei eine externe Signalvorverarbeitung vorgesehen ist; und
- Fig. 4: eine schematische Darstellung einer anderen Brückenschaltung mit Transistoren für einen Drucksensorchip, wobei eine externe Signalvorverarbeitung vorgesehen ist, die einzeln an Gate-Elektroden der Transistoren koppelt.

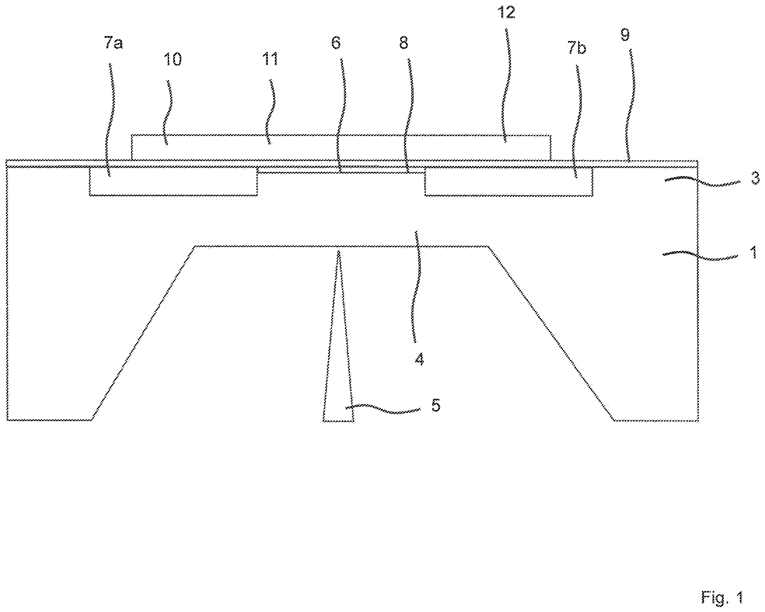

Fig. 1 ist eine schematische Darstellung einer Anordnung für einen halbleiterbasierten Drucksensorchip im Schnitt mit einem Halbleitersubstrat 1, an dem in einem Bereich 2 einer Schichtanordnung 3 eine Druckmembran 4 ausgebildet ist. Ein Pfeil 5 zeigt schematisch eine Druckbeaufschlagung der Druckmembran 4 von unten an. Alternativ ist es möglich, den Druck über ein Medium von oben auf die Druckmembran 4 wirken zu lassen.

In der Schichtanordnung 3 ist ein elektrisch dotierter Kanal 6 ausgebildet, in dem eine elektrische Dotierung eingebracht ist. Der elektrisch dotierte Kanal 6 erstreckt sich zwischen elektrisch dotierten Gebieten 7a, 7b, über welche der elektrisch dotierte Kanal 6 nach außen elektrisch kontaktierbar ist, besonders über Kontaktstellen oder -pads (nicht dargestellt). Mit dem elektrisch dotierten Kanal 6 ist ein piezoresistives Element 8 gebildet, dessen elektrische Leitfähigkeit (Widerstand) sich ändert, wenn die Druckmembran 4 mit Druck beaufschlagt wird, was zu einer mechanischen Verformung einer Druckmembran 4 führt. Ein solcher piezoelektrischer Effekt ist als solcher bekannt.

Auf dem Halbleitersubstrat 1 ist in der Schichtanordnung 3 eine elektrisch isolierende Schicht 9 angeordnet, die in dem gezeigten Ausführungsbeispiel den elektrisch dotierten Kanal 6 sowie die elektrisch dotierten Gebiet 7a, 7b überdeckt und diese so von einer Gate-Elektrode 10 elektrisch isoliert. Die Gate-Elektrode 10 ist Teil eines Transistors 11, der mit der Gate-Elektrode 10, dem elektrisch dotierten Kanal 6 sowie der die elektrisch isolierende Schicht 9 gebildet ist, mit der eine Gate-Elektroden-Isolierung bereitgestellt ist.

Zum Ausbilden einer Anordnung für einen halbleiterbasierten Drucksensorchip können vier der in Fig. 1 gezeigten Strukturen vorgesehen sein, die jeweils eine das piezoresistive Element 8 sowie die zugeordnete Gate-Elektrode 10 umfassende Struktur aufweisen. Die Gate-Elektroden 10 können dann als getrennte elektrisch dotierte Schichtbereiche in einer elektrisch leitfähigen Halbleiterschicht 12 der Schichtanordnung 3 gebildet werden, die auch als Deckschicht bezeichnet werden kann. Diese Schicht kann alternative aus einem Metallmaterial bestehen, mit welchem die Gate-Elektroden 10 gebildet werden können.

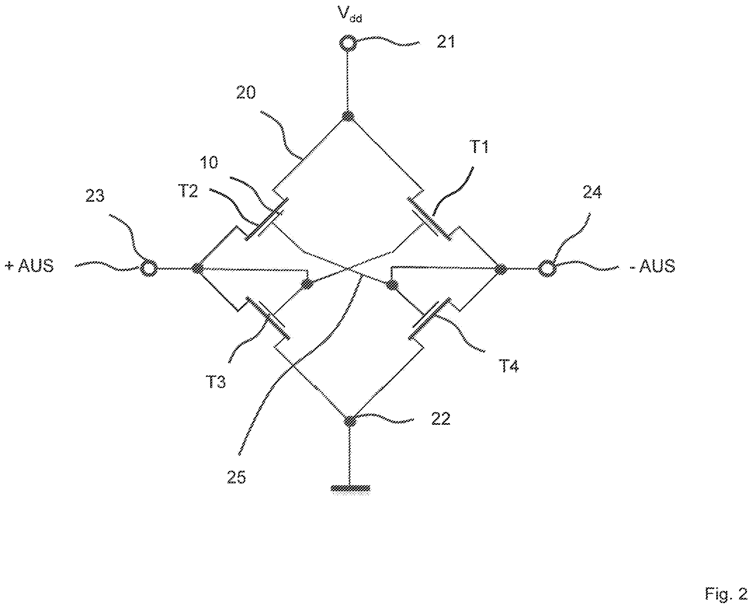

Die Fig. 2 bis 4 zeigen verschiedene Ausführungsformen für eine Brückenschaltung 20 mit vier Transistoren T1, ..., T4, denen jeweils ein piezoresistives Element 8 sowie eine Gate-Elektrode 10 zugeordnet ist.

Über Anschlüsse 21, 22 der Brückenschaltung 20 liegt eine Betriebsspannung V_{dd} an. An Ausgängen 23, 24 liegt ein Ausgangssignal mit positivem und negativem Signal symmetrisch an. Das über die Ausgänge 23, 24 abgegriffene Ausgangssignal wird über eine Signalrücckopplung 25 auf die Gate-Elektroden 10 der Transistoren T1, ..., T4 rückgekoppelt. Hierdurch wird die im Fall einer Druckbeaufschlagung entstehende Brückenverstimmung verstärkt.

Bei der Ausführungsform der Brückenschaltung 20 in Fig. 2 ist die Signalrückkopplung 25 auf dem Drucksensorchip selbst vorgesehen. Gemäß dem gezeigten Ausführungsbeispiel ist die Signalrückkopplung frei von (zusätzlichen oder weiteren) Transistoren gebildet, wahlweise auch frei von anderen (aktiven) Schaltungselementen, so dass die Brückenschaltung 20 ausschließlich die vier T1, ..., T4 aufweist.

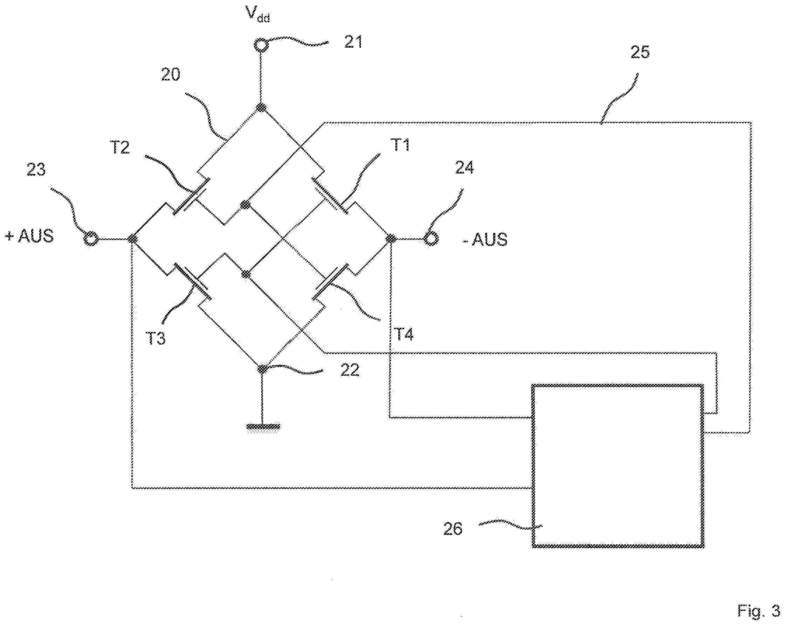

Alternativ dazu zeigt Fig. 3 eine Ausführungsform, bei der die Signalrückkopplung 25 mit einer externen Signalvorverarbeitung 26 ausgebildet ist, die entweder zusätzlich auf einem Drucksensorchip angeordnet oder außerhalb des Drucksensorchips mit einem weiteren Chip gebildet ist. Bei der Ausführung in Fig. 3 sind die Gate-Elektroden 10 paarweise an Ausgänge der externen Signalvorverarbeitung 26 gekoppelt.

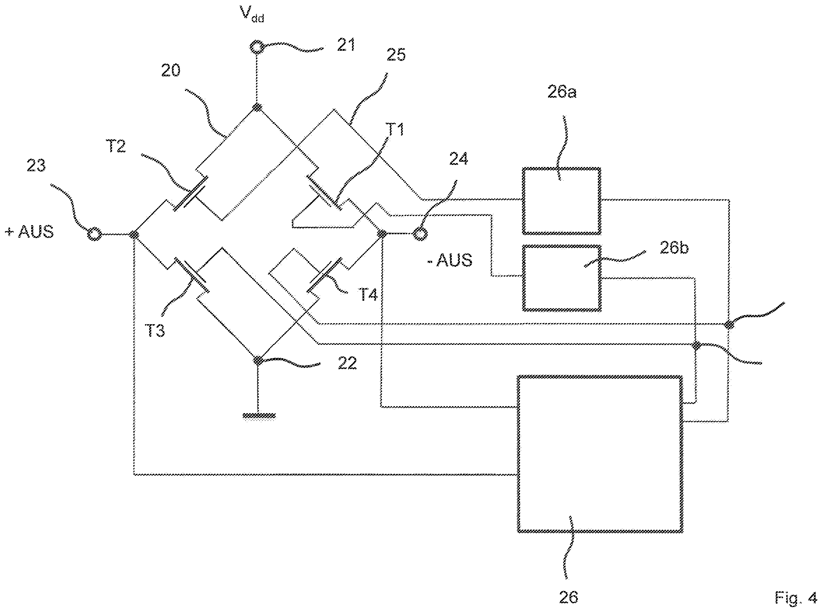

Bei der Ausgestaltung in Fig. 4 koppeln die Gate-Elektroden 10 der Transistoren T1, ..., T4 einzeln an die externe Signalvorverarbeitung 26 mit weiteren Schaltungselementen 26a, 26b. Hierdurch ist es ermöglicht, Arbeitspunktspannungen für die Transistoren T1, ..., T4 individuell einzustellen in Verbindung mit der verstärkenden Signalrückkopplung.

Nachfolgend werden weitere Aspekte erläutert.

In der Grundanordnung nach Fig. 2 können die positiven elektrischen Signale des Ausgangs (+ AUS) der Brückenschaltung 20 auf dem Chip an die Gate-Elektroden 10 der Transistoren T1, T3 im rechten und linken Zweig der Brückenschaltung 20 gelegt werden, und die negativen Signale (- AUS) werden an die Gate-Elektroden 10 der anderen verbleibenden Transistoren T2, T4 angeschlossen. Damit wird erreicht, dass die durch Piezoresitivität generierten anfänglichen Ausgangssignale (Brückenverstimmung) verstärkt werden. In der Folge entsteht systematisch ein höherer Offset der gewonnenen Ausgangssignale der Brückenschaltung 20 bei einem vergleichbaren mechanischen Eingangssignal und vergleichbarer Membrandicke.

Die Brückensignale können gemäß Fig. 3 alternativ zunächst an die externe Signalvorverarbeitung 26 mit einem externen Signalprozessor oder analogen Automaten übergeben werden, der eine Signalvorverarbeitung und mögliche Korrekturen bezüglich Linearität, Kennlinien und / oder Temperatur vornimmt und dessen Ausgangssignale dann an die auf dem Chip befindlichen Gate-Elektroden 10 über den Piezostrukturen mit den piezoresistiven Elementen 8 geschaltet werden. Auch in diesem Fall kann eine weitere Signalverstärkung auf dem Drucksensorchip und damit eine deutlich höhere Empfindlichkeit des Sensorchips erreicht werden.

Die Größe der möglichen Signalverstärkung hängt vom Dotierungsniveau der piezoresistiven Elemente 8 sowie der Dicke der als Gate-Isolator fungierenden elektrisch isolierenden Schicht 9 zwischen der leitfähigen Schicht der Gate-Elektrode 10 und dem Halbleitersubstrat 1 ab. Auch die Übertragungsfunktion einer internen oder externen angeordneten Signalverarbeitungsschaltung 26 beeinflußt die mögliche Gesamtempfindlichkeit eines solchen Systems.

Werden die Gate-Elektroden 10 in einer Schicht aus Polysilizium hergestellt, ist den Gate-elektroden jeweils ein einzelner Bereich zugeordnet, der getrennt von den anderen Bereichen der anderen Gate-Elektroden hergestellt ist. Es sind so wenigstens vier einzelne Strukturen (Transistoren) direkt auf dem Chip einzeln oder als Pärchen an die entsprechenden Ausgänge der Brückenschaltung 20 kontaktiert.

Die Transistoren T1, T2, T3 oder T4 können als MOS-Struktur (Metall-Oxid) ausgeführt sein. Typischerweise sind zwei Signaleingänge vorgesehen. Der erste Signaleingang mit Einfluss auf den Widerstand des elektrisch dotierten Kanals 6 ist die Piezosensitivität. Hier wird die Leitfähigkeit (Widerstand) des elektrisch dotierten Kanals 6, zum Beispiel des MOS-Kanals, über eine mechanische Verspannung moduliert. Der zweite Signaleingang ist die jeweilige Gate-Elektrode 10 der Struktur, das mit einer elektrischen Ansteuerung ebenfalls die Leitfähigkeit des Kanalwiderstandes verändern kann.

Eine anfängliche Modulation über den piezoresistiven Eingang wird also zunächst ein symmetrisches Ausgangssignal an +AUS und -AUS generieren, das dann an die Gate-Elektroden 10 zurückgekoppelt wird, was eine Verstärkung im Ausgangssignal an +AUS und -AUS bewirkt. Wie groß diese zusätzliche Verstärkung der Ausgangssignale an +AUS und -AUS ist, hängt von der genauen Wahl der Kanaldotierung im elektrisch dotierten Kanal 6, deren Tiefe im Kristall und der Konzentration sowie auch der Dicke und Art des Gate-Isolators ab, über die die Gate-Elektrode 10 vom elektrisch dotierten Kanal 6 isoliert ist.

Eine externe Signalverarbeitung kann vorgesehen sein, um zum Beispiel Filterfunktionen auszuführen und / oder Nichtlinearitäten in den Kennlinien beispielsweise bezüglich der Temperatur oder anderer Einflüsse der Gesamtkonstruktion zu kompensieren.

Außerdem kann noch das an sich bekannte Phänomen des sogenannten "level shifting" auftreten. Die oberen beiden Transistoren T1, T2 der Brückenschaltung 20 erhalten in der Regel nicht die gleiche DC Arbeitspunktspannung am Gate wie die unteren beiden Transistoren T3, T4, da sich deren Source / Drain Potentiale deutlich unterscheiden. Deshalb kann für alle vier Transistoren T1, ..., T4 ein extra Anschluss der jeweiligen Gate-Elektrode 10 vorgesehen sein. Die externe Signalvorverarbeitung 26 liefert entweder für alle vier Transistoren T1, ..., T4 gleich das im DC-Arbeitspunkt passende Ausgangssignal, oder die zwei dargestellten Ausgangssignale werden jeweils noch über eine Schaltung zum Verschieben des Arbeitspunktpegels 26a, 26b so verändert, dass die vier gewünschten unterschiedlichen Signale generiert werden wie es in Fig. 4 dargestellt ist.

Da oft beim Entwurf eines Chips noch nicht präzise der Abstand zwischen dem Anfang der Druckmembran 4 und dem elektrisch dotierten Kanal 6, mit dem das piezoresistive Element 8 gebildet ist, festgelegt wird, kann ein hier einzeln als Transistor dargestelltes Element auch aus einer Serienschaltung von zwei oder mehr Kanalgebieten bestehen. Diese haben dann in der Regel unterschiedliche Abstände vom äußeren Anfang des Bereichs der Druckmembran 4, so dass wenigstens einer dieser Bereiche das maximale Piezosignal mit einer dann optimalen Brückenverstimmung erhält Die anderen Kanalgebiete liegen dann alle in Serie dazu. Und sie können natürlich auch alle einzeln als Transistor ausgeführt worden sein mit einer gemeinsamen oder jeweils getrennten Gate-Elektrode. Diese in Serie geschalteten Transistoren eines Brückenzweiges erhalten dann alle das gleiche Gate-Potential.

## Patentansprüche

1. Anordnung für einen halbleiterbasierten Drucksensorchip, mit:
- vier piezoresistiven Elementen (8), die mit einem elektrisch dotierten Kanal (6) in einer Schichtanordnung (3) im Bereich einer Druckmembran (4) eines Halbleitersubstrats (1) gebildet sind;
- einer elektrisch leitfähigen Deckschicht (12), die in der Schichtanordnung (3) gebildet ist und mittels einer Isolierschicht (9) von den piezoresistiven Elementen (8) elektrisch isoliert ist;
- einer Brückenschaltung (20) von Transistoren (T1, ..., T4), die jeweils mit einem der piezoresistiven Elemente (8) gebildet sind, wobei Gate-Elektroden (10) der Transistoren (T1, ..., T4) in der elektrisch leitfähigen Deckschicht (12) in elektrisch dotierten Schichtbereichen angeordnet sind, die voneinander getrennt gebildet sind;
**gekennzeichnet durch**
- eine Signalrückkopplung (25), mit der ein symmetrisches Ausgangssignal mit einem positiven und einem negativen Ausgangssignal (+AUS, -AUS) an einem positiven und einem negativen Ausgang (23, 24) der Brückenschaltung (20) auf die Gate-Elektroden (10) der Transistoren (T1, ..., T4) der Brückenschaltung (20) signalverstärkend rückgekoppelt ist.

2. Anordnung nach Anspruch 1, **dadurch gekennzeichnet, dass** die Gate-Elektroden (10) zum Rückkoppeln einzeln an die Ausgänge (23, 24) der Brückenschaltung (20) angeschlossen sind.

3. Anordnung nach Anspruch 1 oder 2, **dadurch gekennzeichnet, dass** die Transistoren (T1, ..., T4) jeweils mit einer als Metall-Oxid-Halbleiterstruktur gebildet sind, in welcher der elektrisch dotierten Kanal (6) der piezoresistiven Elementen (8) als Metall-Oxid-Halbleiterkanal ausgeführt ist.

4. Anordnung nach mindestens einem der vorangehenden Ansprüche, dadurch g e - **kennzeichnet**, dass die Signalrückkopplung (25) eine Signalvorverarbeitung (26) aufweist, die eingerichtet ist, das an den Ausgängen (23, 24) der Brückenschaltung (20) anliegende Ausgangssignal vor dem Rückkoppeln aufzubereiten.

5. Anordnung nach Anspruch 4, **dadurch gekennzeichnet, dass** die Gate-Elektroden (10) paarweise an die Signalvorverarbeitung (26) koppeln.

6. Anordnung nach Anspruch 4, **dadurch gekennzeichnet, dass** die Gate-Elektroden (10) einzeln an die Signalvorverarbeitung (26) koppeln.

7. Anordnung nach Anspruch 6, **dadurch gekennzeichnet, dass** die Signalvorverarbeitung (26) den Arbeitspunkt verschiebende Schaltungselemente aufweist, die jeweils einem der Transistoren (T1, ..., T4) zugeordnet und eingerichtet sind, den jeweiligen Arbeitspunkt der Transistoren (T1, ..., T4) einzustellen.

8. Anordnung nach mindestens einem der vorangehenden Ansprüche, dadurch g e - **kennzeichnet**, dass die Gate-Elektroden (10) der Transistoren (T1, ..., T4) in der elektrisch leitfähigen Deckschicht (12) aus elektrisch dotiertem Polysilizium sind.

9. Anordnung nach mindestens einem der vorangehenden Ansprüche, dadurch g e - **kennzeichnet**, dass bei den piezoresistiven Elementen (8) der elektrisch dotierte Kanal (6) zwischen elektrisch dotierten Gebieten (7a, 7b) angeordnet und mit diesen elektrisch verbunden ist, wobei der elektrisch dotierte Kanal (6) über die elektrisch dotierten Gebiete (7a, 7b) nach außen kontaktierbar ist.

10. Anordnung nach Anspruch 9, **dadurch gekennzeichnet, dass** der elektrisch dotierte Kanal (6) in Berührungskontakt mit den elektrisch dotierten Gebieten (7a, 7b) gebildet ist.

11. Anordnung nach Anspruch 9 oder 10, **dadurch gekennzeichnet, dass** die elektrisch dotierten Schichtbereiche, in welchen die Gate-Elektroden (10) gebildet sind, mit Blick auf eine Flachseite der Druckmembran (4) mit den elektrisch dotierten Gebieten (7a, 7b) überlappen.

12. Drucksensorchip, mit einer Anordnung nach mindestens einem der vorangehenden Ansprüche.

13. Drucksensorchip nach Anspruch 12, **dadurch gekennzeichnet, dass** eine Signalvorverarbeitung (26), die eingerichtet ist, ein Ausgangssignal vor dem Rückkoppeln aufzubereiten, chipintern ausgebildet ist.

14. Drucksensorchip nach Anspruch 12, **dadurch gekennzeichnet, dass** eine Signalvorverarbeitung (26), die eingerichtet ist, ein Ausgangssignal vor dem Rückkoppeln aufzubereiten, chipextern ausgebildet ist.

## Claims

1. An assembly for a semiconductor pressure sensor chip, comprising:
- four piezoresistive elements (8) formed with an electrically doped channel (6) in a layered structure (3) in the region of a pressure diaphragm (4) of a semiconductor substrate (1);
- an electrically conductive cover layer (12) formed in the layered structure (3) and electrically insulated from the piezoresistive elements (8) by means of an insulating layer (9);
- a bridge circuit (20) of transistors (T1, ..., T4) each formed with one of said piezoresistive elements (8), wherein gate electrodes (10) of said transistors (T1, ..., T4) are formed in said electrically conductive cover layer (12) in electrically doped layer regions which are formed separately from each other; **characterized by**
- a signal feedback means (25) for feeding back a balanced output signal including a positive and a negative output signal (+OUT, -OUT) at a positive and a negative output (23, 24) of the bridge circuit (20), respectively, to the gate electrodes (10) of the transistors (T1, ..., T4) of the bridge circuit (20) while amplifying the same.

2. The assembly according to claim 1, **characterized in that** the gate electrodes (10) are individually connected to the outputs (23, 24) of the bridge circuit (20) for feedback.

3. The assembly according to claims 1 or 2, **characterized in that** the transistors (T1, ..., T4) are each formed with a metal-oxide semiconductor structure, in which the electrically doped channel (6) of the piezoresistive elements (8) is configured as a metal-oxide semiconductor channel.

4. The assembly according to at least one of the preceding claims, **characterized in that** the signal feedback means (25) includes signal preprocessing means (26) adapted to process the output signal present at the outputs (23, 24) of the bridge circuit (20) before feedback.

5. The assembly according to claim 4, **characterized in that** the gate electrodes (10) are coupled in pairs to the signal preprocessing means (26).

6. The assembly according to claim 4, **characterized in that** the gate electrodes (10) are coupled individually to the signal preprocessing means (26).

7. Arrangement according to claim 6, **characterized in that** the signal preprocessing means (26) include circuit elements shifting the operating point, which are each assigned to one of the transistors (T1, ..., T4) and adapted to adjust the respective operating point of the transistors (T1, ..., T4).

8. The assembly according to at least one of the preceding claims, **characterized in that** the gate electrodes (10) of the transistors (T1, ..., T4) in the electrically conductive cover layer (12) are made of electrically doped polysilicon.

9. The assembly according to at least one of the preceding claims, **characterized in that** in the piezoresistive elements (8) the electrically doped channel (6) is arranged between electrically doped regions (7a, 7b) and electrically connected thereto, wherein the electrically doped channel (6) can be contacted to the outside via the electrically doped regions (7a, 7b).

10. The assembly according to claim 9, **characterized in that** the electrically doped channel (6) is formed in contact with the electrically doped regions (7a, 7b).

11. The assembly according to claims 9 or 10, **characterized in that** the electrically doped layer regions in which the gate electrodes (10) are formed overlap with the electrically doped regions (7a, 7b) when looking towards a flat side of the pressure diaphragm (4).

12. A pressure sensor chip, comprising an assembly according to at least one of the preceding claims.

13. The pressure sensor chip according to claim 12, **characterized in that** a signal preprocessing means (26) adapted to process an output signal before feedback is formed on-chip.

14. The pressure sensor chip according to claim 12, **characterized in that** a signal preprocessing means (26) adapted to process an output signal before feedback is formed off-chip.

## Revendications

1. Agencement pour puce de capteur de pression à semi-conducteur, comprenant :
- quatre éléments piézo-résistifs (8), réalisés avec un canal (6) électriquement dopé au sein d'un agencement en couches (3) dans la région d'une membrane de pression (4) d'un substrat semi-conducteur (1) ;
- une couche supérieure (12) électriquement conductrice réalisée au sein de l'agencement en couches (3) et isolée électriquement des éléments piézo-résistifs (8) au moyen d'une couche isolante (9) ;
- un montage en pont (20) de transistors (T1, ..., T4) respectivement réalisés avec un des éléments piézo-résistifs (8), dans lequel des électrodes de grille (10) des transistors (T1, ..., T4) sont agencées au sein de la couche supérieure (12) électriquement conductrice dans des régions de couche électriquement dopées réalisées de manière séparée les unes des autres ; **caractérisé par** :
- une rétroaction de signal (25) au moyen de laquelle un signal de sortie symétrique présentant un signal de sortie positif et un signal de sortie négatif (+AUS, -AUS) au niveau d'une sortie positive et d'une sortie négative (23, 24) du montage en pont (20) est renvoyé avec amplification du signal aux électrodes de grille (10) des transistors (T1, ..., T4) du montage en pont (20).

2. Agencement selon la revendication 1, **caractérisé en ce que** les électrodes de grille (10) sont raccordées individuellement aux sorties (23, 24) du montage en pont (20) en vue de la rétroaction.

3. Agencement selon la revendication 1 ou 2, **caractérisé en ce que** les transistors (T1, ..., T4) sont respectivement réalisés avec une structure semiconductrice à oxyde métallique au sein de laquelle le canal (6) électriquement dopé des éléments piézo-résistifs (8) est mis en œuvre sous la forme d'un canal semi-conducteur à oxyde métallique.

4. Agencement selon au moins l'une quelconque des revendications précédentes, **caractérisé en ce que** la rétroaction de signal (25) présente un prétraitement de signal (26) conçu pour préparer le signal de sortie appliqué aux sorties (23, 24) du montage en pont (20) avant la rétroaction.

5. Agencement selon la revendication 4, **caractérisé en ce que** les électrodes de grille (10) sont couplées par paires au prétraitement de signal (26).

6. Agencement selon la revendication 4, **caractérisé en ce que** les électrodes de grille (10) sont couplées individuellement au prétraitement de signal (26).

7. Agencement selon la revendication 6, **caractérisé en ce que** le prétraitement de signal (26) présente des éléments de circuit décalant le point de fonctionnement, associés respectivement à l'un des transistors (T1, ..., T4) et conçus pour ajuster le point de fonctionnement respectif des transistors (T1, ..., T4).

8. Agencement selon au moins l'une quelconque des revendications précédentes, **caractérisé en ce que** les électrodes de grille (10) des transistors (T1, ..., T4) au sein de la couche supérieure (12) électriquement conductrice sont en polysilicium électriquement dopé.

9. Agencement selon au moins l'une quelconque des revendications précédentes, **caractérisé en ce que**, au sein des éléments piézo-résistifs (8), le canal (6) électriquement dopé est agencé entre des zones (7a, 7b) électriquement dopées et est relié électriquement auxdites zones, dans lequel le canal (6) électriquement dopé peut être mis en contact avec l'extérieur par l'intermédiaire des zones (7a, 7b) électriquement dopées.

10. Agencement selon la revendication 9, **caractérisé en ce que** le canal (6) électriquement dopé est réalisé de manière à être en contact avec les zones (7a, 7b) électriquement dopées.

11. Agencement selon la revendication 9 ou 10, **caractérisé en ce que** les régions de couche électriquement dopées au sein desquelles sont réalisées les électrodes de grille (10) chevauchent les zones (7a, 7b) électriquement dopées en regardant vers un côté plat de la membrane de pression (4).

12. Puce de capteur de pression comprenant un agencement selon au moins l'une quelconque des revendications précédentes.

13. Puce de capteur de pression selon la revendication 12, **caractérisée en ce qu'**un prétraitement de signal (26) conçu pour préparer un signal de sortie avant la rétroaction est mis en œuvre de manière interne à la puce.

14. Puce de capteur de pression selon la revendication 12, **caractérisée en ce qu'**un prétraitement de signal (26) conçu pour préparer un signal de sortie avant la rétroaction est mis en œuvre de manière externe à la puce.
